# EUROPÄISCHE PATENTSCHRIFT

(11) **EP 1 078 440 B1**
(45) Veröffentlichungstag und Bekanntmachung des Hinweises auf die Patenterteilung: **21.06.2006**
(21) Anmeldenummer: 99957952.7
(22) Anmeldetag: 29.10.1999
(51) Int. Cl.: H02K 7/116, H02K 11/00, E05F 15/16, B60S 1/08

(54) **ELEKTROMOTORISCHER ANTRIEB, INSBESONDERE FENSTERHEBERANTRIEB FÜR EIN KRAFTFAHRZEUG**
ELECTROMOTIVE DRIVE, ESPECIALLY A POWER WINDOW DRIVE FOR A MOTOR VEHICLE
ORGANE DE COMMANDE A MOTEUR ELECTRIQUE, NOTAMMENT ORGANE DE COMMANDE DE LEVE-VITRE POUR UN VEHICULE AUTOMOBILE

(30) Priorität: 09.03.1999 DE 19910193
(43) Veröffentlichungstag der Anmeldung: 28.02.2001
(73) Patentinhaber: ROBERT BOSCH GMBH, 70442 Stuttgart (DE)
(72) Erfinder: WEBER, Matthias, D-76534 Baden-Baden (DE); RAECKE, Mathis, D-76131 Karlsruhe (DE); HESSDOERFER, Robert, D-97753 Karlstadt-Stetten (DE); HAGER, Martin, D-77830 Bühlertal (DE); DREIER, Friedrich-Wilhelm, D-76547 Sinzheim (DE)
(86) Internationale Anmeldenummer: PCT/DE1999/003464
(87) Internationale Veröffentlichungsnummer: WO 2000/054393

(56) Entgegenhaltungen:
- EP-A- 0 945 961
- DE-A- 3 823 350
- DE-A- 4 337 390
- US-A- 5 063 317
- US-A- 5 382 857

## Beschreibung

### Stand der Technik

Die Erfindung betrifft einen elektromotorischen Antrieb, insbesondere Fensterheberantrieb für ein Kraftfahrzeug, nach der Gattung des Hauptanspruchs.

Elektromotorische Antriebe sind allgemein bekannt, wobei sie speziell im Kraftfahrzeugbereich zur Verstellung vielfältiger Fahrzeugkomponenten einsetzbar sind. Dies betrifft beispielsweise die Verstellung von Fahrzeugsitzen, von Fenstern und Schiebedächern oder auch die Verstellung von Spiegeln. Die eingesetzten Antriebe weisen in der Regel einen Elektromotor und ein diesem nachgeordnetes Getriebe, sowie eine Steuerungs- und Versorgungselektronik auf. Diese Elektronik ist auf einer Platine aufgebaut, welche in einem Elektronikgehäuse untergebracht ist. Das Elektronikgehäuse wird bei der Montage auf ein Getriebegehäuseteil aufgesteckt und dort fixiert. Je nach Länge des Elektronikgehäuseteils können im Betrieb erhebliche Querbelastungen auf das Elektronikgehäuse einwirken, die zu einem Lösen der Verbindung mit dem Getriebegehäuse oder zu einem Bruch des Elektronikgehäuses führen können. Aus diesem Grund werden lange Elektronikgehäuse gegenüber dem elektromotorischen Antrieb an einer weiteren Stelle fixiert und gehalten. Dies kann beispielsweise mit einer Haltevorrichtung realisiert werden, die an einer Seite fest mit einem Poltopf des Elektromotors verbunden ist, und an der anderen Seite das Elektronikgehäuse umfasst und somit gegenüber dem Poltopf abstützt.

Mit der US 5, 063, 317 ist ein Elektromotor, insbesondere für Scheibenwischer, bekannt geworden, bei dem ein Elektronikgehäuse neben einem Poltopf des Elektromotors angeordnet ist. Dabei ist am Elektronikgehäuse als Halteelement ein Auge angeformt, das über das Ende des Poltopfs greift. Desweiteren sind am Getriebegehäuse Verbindungselemente angeformt, mittels derer das Elektronikgehäuse an das Getriebegehäuse angebunden wird.

Die DE 38 23 350 A1 beschreibt einen Elektromotor, dessen Motorgehäuse ein äußeres Profil mit achsparallelen Nuten aufweist. Auf diesem Außenprofil ist ein Zwischenglied befestigt, auf das ein Aufnahmekasten für die Elektronik aufgeschraubt wird.

Aus der EP 09 45 961 A1 ist ein Elektromotor mit einer Einschubelektronik bekannt geworden, bei dem das offene Elektronikgehäuse radial zur Ankerwelle in eine entsprechende Schnittstelle des Elektromotors eingeschoben wird. Das Elektronikgehäuse weist dabei Rastzungen auf, die beim radialen Einschieben in entsprechende Gegenrastmittel eingreifen.

In der US 5, 382, 857 ist eine elektrische Antriebseinheit dargestellt, bei der ein Elektronikgehäuse an verschiedenen Positionen am Elektromotor befestigt werden kann. Dabei ist zwischen dem Polgehäuse und dem Getriebegehäuse ein Bürstenhalterbauteil eingefügt, das eine Schnittstelle zum Elektronikgehäuse aufweist.

Nachteilig dabei ist, dass die Haltevorrichtung in einem Zwischenmontageschritt vor der Elektronik am Poltopf des Elektromotors montiert werden muß, und dann fest mit dem Motor verbunden ist. Solche Haltevorrichtungen müssen speziell an die Geometrie des Elektronikgehäuses angepasst sein, weshalb der Einsatz einer anderen Elektronik auch die Montage einer anderen Haltevorrichtung nach sich zieht. Ein nachträglicher Umbau beispielsweise ist jedoch schwierig, weil die Haltevorrichtung nicht ohne weiteres demontierbar ist. Außerdem erschweren die fest mit dem Poltopfgehäuse verbundenen Haltebügel die nachträgliche Demontage der Elektronik, beispielsweise um Wartungsarbeiten am elektromotorischen Antrieb oder einen Austausch des Elektronikgehäuses durchzuführen.

Somit ist die Flexibilität des elektromotorischen Antriebs durch die Verwendung dieser Haltevorrichtung stark eingeschränkt, insbesondere in bezug auf die Verwendung verschiedener Elektroniken und die nachträgliche Demontage einer einmal eingesetzten Elektronik.

### Vorteile der Erfindung

Der erfindungsgemäße elektromotorische Antrieb mit den Merkmalen des Hauptanspruchs hat den Vorteil, daß die Haltevorrichtung zur Abstützung des Elektronikgehäuses universell für verschiedene Elektronikgehäuse eingesetzt werden kann. Ein weiterer entscheidender Vorteil ergibt sich dadurch, daß die Haltevorrichtung in einem letzten Montageschritt hinzufügbar und jederzeit auch wieder zerstörungsfrei demontierbar ist. Dies wird im wesentlichen durch eine Führung an der Haltevorrichtung ermöglicht, die mit einer am Elektronikgehäuse angeordneten Gegenführung verbunden wird. Dadurch ist die Haltevorrichtung insbesondere auch nachträglich einschiebbar ausgeführt.

Durch die in den Unteransprüchen angegebenen Maßnahmen sind vorteilhafte Weiterbildungen der Vorrichtung nach dem Hauptanspruch möglich.

So ist es von Vorteil, wenn die Führung auf einem Mittelteil der Haltevorrichtung entlang des Poltopfes angeordnet ist. Damit kann das Elektronikgehäuse optimal gegenüber dem Poltopfgehäuse abgestützt, und seitliche, auf das Elektronikgehäuse einwirkende Kräfte aufgenommen werden. Diese seitlichen Kräfte entstehen beispielsweise beim Abziehen eines mit der Elektronik verbundenen Steckers, bei einer Schüttelprüfung oder anderen mechanischen Belastungen. Besonders bei einem langen Elektronikgehäuse kann die Belastung durch die auftretenden Drehmomente auf diese Weise vermindert werden.

Wenn die Führung der Haltevorrichtung aus zwei sich gegenüberliegenden, eine T-Nut bildenden Stegen besteht, die längs des Mittelteils angeordnet sind, dann ist eine besonders einfache, bequeme und sichere Montage des Haltebügels gewährleistet. Die Stege müssen jedoch nicht unbedingt eine T-Nut bilden, sie können beispielsweise auch eine Schwalbenschwanzführung oder dergleichen bereitstellen. Entscheidend ist nur, daß die Haltevorrichtung zwischen Poltopfgehäuse und Elektronikgehäuse einschiebbar ist, und die Haltevorrichtung sicher mit dem Elektronikgehäuse verbindet.

Weiterhin ist von Vorteil, wenn die Haltevorrichtung eine Einrastvorrichtung aufweist, die eine Verbindung mit einem dem Elektromotor zugeordneten Bürstenhalter ermöglicht. Wenn die Einrastvorrichtung aus einem Rastelement besteht, das an seinem freien Ende mit einem Rasthaken versehen ist, dann ergibt sich die Möglichkeit, die Haltevorrichtung mit diesem Rasthaken in einer in dem Bürstenhalter integrierten Rasthakenaufnahme sicher zu verrasten.

Weist die Rasthakenaufnahme eine gestufte Endfläche auf, dann kann die Haltevorrichtung in vorteilhafter Weise längsspielfrei montiert werden.

Um eine Verbindung der zwischen dem Poltopfgehäuse und dem Elektronikgehäuse einschiebbaren Haltevorrichtung mit dem Poltopfgehäuse zu erreichen, ist eine Aufnahme erforderlich, die an einem dem Mittelteil der Haltevorrichtung zugeordnetem Aufnehmerteil angeordnet ist. Besteht die Aufnahme im Aufnehmerteil aus einer kreisförmigen Öffnung, dann kann damit ein zylindrischer Fortsatz am freien Ende des Poltopfes in vorteilhafter Weise aufgenommen werden.

Die Aufnahme im Aufnehmerteil kann aber auch andere, beliebige geometrische Formen aufweisen. Wichtig ist nur, daß durch sie die Haltevorrichtung optimal mit dem Poltopf des Elektromotors verbindbar ist.

### Zeichnung

In der Zeichnung ist ein Ausführungsbeispiel eines erfindungsgemäßen elektromotorischen Antriebs dargestellt und in der nachfolgenden Beschreibung näher erläutert.

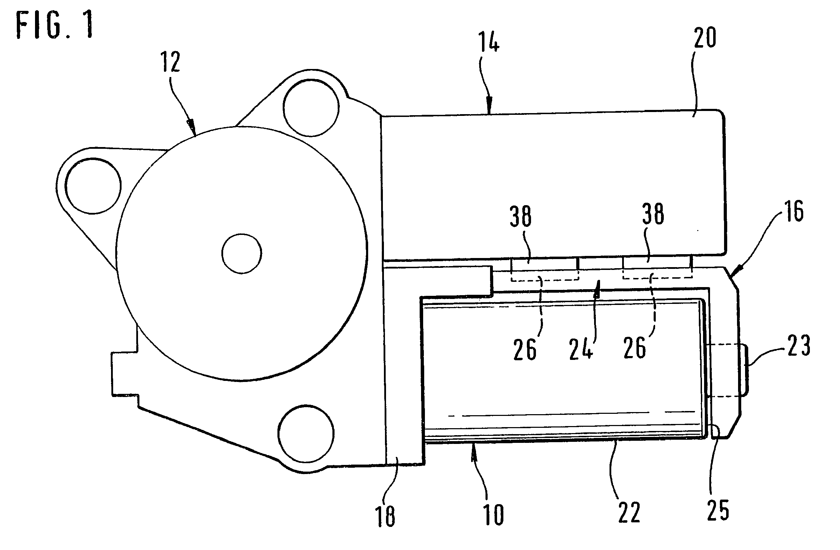

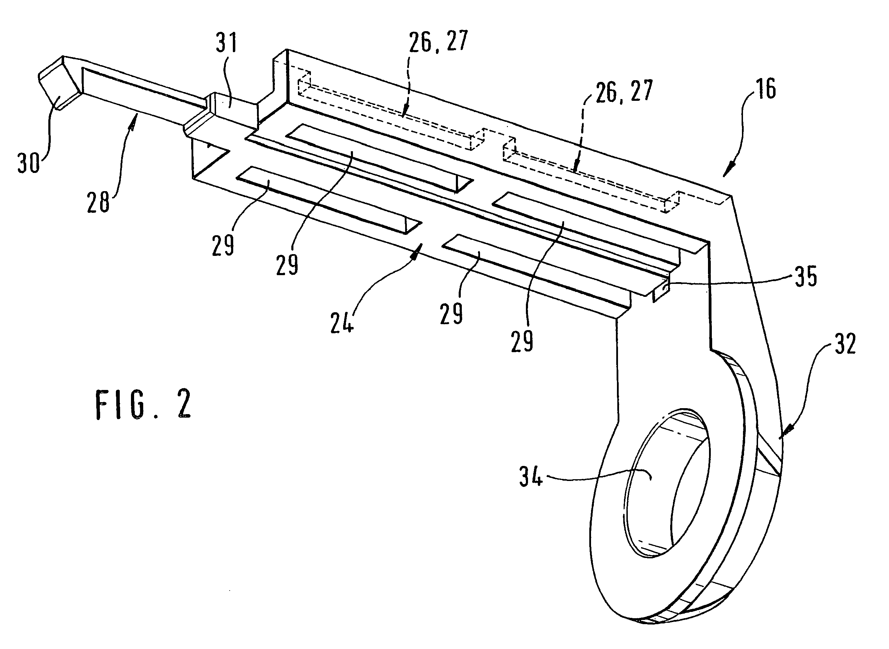

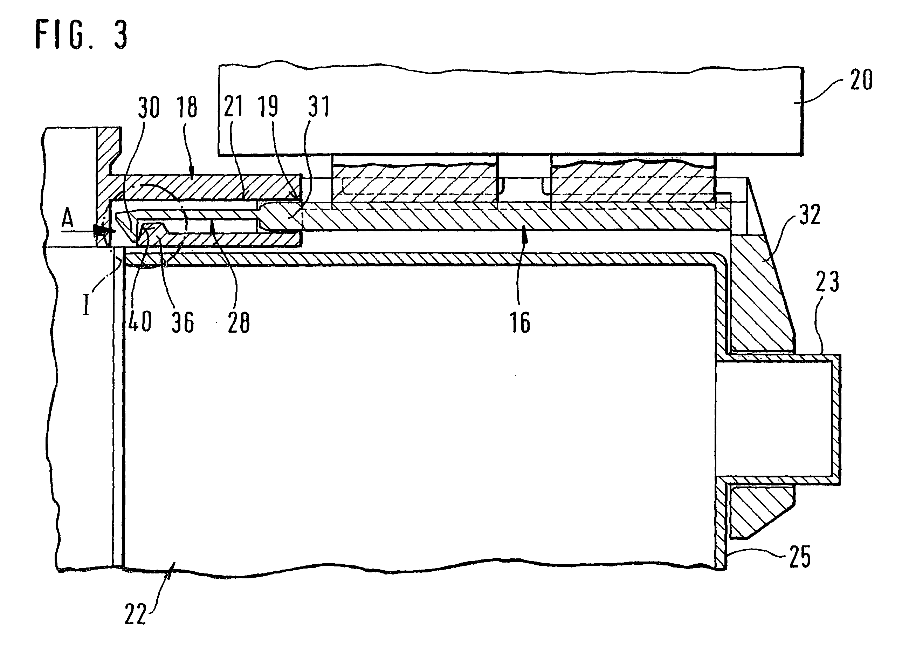

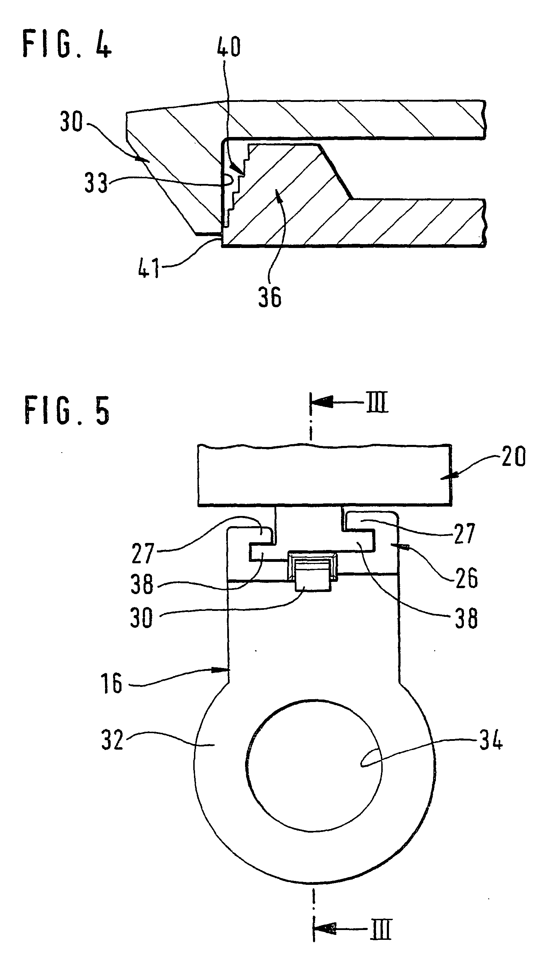

Es zeigen Figur 1 eine schematische Darstellung eines elektromotorischen Antriebs, Figur 2 eine perspektivische Ansicht einer möglichen Haltevorrichtung als Teil des elektromotorischen Antriebs, Figur 3 einen Teilschnitt durch Figur 1, Figur 4 eine vergrößerte Darstellung des Bereiches I in Figur 3 und Figur 5 eine Ansicht in Richtung des Pfeiles A in Figur 3.

### Beschreibung des Ausführungsbeispiels

Das in Figur 1 dargestellte Ausführungsbeispiel zeigt einen erfindungsgemäßen, elektromotorischen Antrieb, insbesondere Fensterantrieb für ein Kraftfahrzeug mit einem Elektromotor 10, einem Getriebe 12 und einer Motorelektronik 14. Zwischen einem Elektronikgehäuse 20 und einem Poltopf 22 des Elektromotors 10 ist eine Haltevorrichtung 16 angeordnet.

Die Haltevorrichtung 16 taucht mit ihrem dem Getriebe 12 zugewandten Ende in einen Bürstenhalter 18 ein. Das dem Getriebe 12 abgewandte Ende der Haltevorrichtung 16 ist an einem zylindrischen Fortsatz 23 des Poltopfes 22 festgelegt. Das Mittelteil 24 der Haltevorrichtung 16 ist durch die Anordnung einer an der Haltevorrichtung 16 angebrachten Führung 26 mit einer am Elektronikgehäuse 20 angebrachten Gegenführung 38 verbunden. Durch diese Anordnung, die im wesentlichen T-Nut-förmig ausgebildet ist, ist gewährleistet, daß die Haltevorrichtung, welche das Elektronikgehäuse gegenüber dem Poltopf 22 abstützt, jederzeit zerstörungsfrei montiert bzw. demontiert werden kann.

In Figur 2 ist ein Ausführungsbeispiel der Haltevorrichtung 16 des erfindungsgemäßen elektromotorischen Antriebs perspektivisch dargestellt. Hierbei sind genau wie in den folgenden Figuren gleiche Merkmale mit den gleichen Bezugszeichen versehen.

Die Haltevorrichtung 16 besteht aus einem Aufnehmerteil 32, einem Mittelteil 24 und einer Einrastvorrichtung 28. Die Einrastvorrichtung 28 ist an ihrem freien Ende mit einem Rasthaken 30 versehen, der zur Fixierung der Haltevorrichtung 16 in dem in Figur 1 dargestellten Bürstenhalter 18 dient. Zur genauen Positionierung der Haltevorrichtung 16 ist die Einrastvorrichtung 28 mit einem Zapfen 31 versehen, der so geformt ist, daß er bei montierter Haltevorrichtung 16 in eine in Figur 3 dargestellte Öffnung 19 des Bürstenhalters 18 paßt und teilweise an dessen Innenfläche 21 anliegt.

Das Mittelteil 24 der Haltevorrichtung 16 ist mit T-Nut-förmigen Stegen 27 versehen, die die Führung 26 bilden und mit denen eine Verbindung zu der Gegenführung 38 des Elektronikgehäuses 20 hergestellt wird.

Die Aussparungen 29 am Mittelteil 24 der Haltevorrichtung 16 sind für die Funktion der Haltevorrichtung ohne Belang, sie sind aus fertigungstechnischen Gründen notwendig und tragen darüber hinaus zu einer Gewichtsreduzierung bei.

An das Mittelteil 24 der Haltevorrichtung 16 schließt sich ein Aufnehmerteil 32 an, welches im wesentlichen quer zum Mittelteil 24 angeordnet ist. Dieses Aufnehmerteil 32 weist eine Aufnahme 34 auf, und wird durch eine kreisförmige Öffnung zur Aufnahme des zylindrischen Fortsatzes 23 des Poltopfes 22 gebildet.

Zwischen Mittelteil 24 und Aufnehmerteil 32 ist eine Demontageöffnung 35 eingearbeitet, welche die Demontage der Haltevorrichtung 16 erleichtert. Durch die Demontageöffnung 35 kann ein Werkzeug geführt werden, mit dem die in den Figuren 3 und 4 dargestellte Verbindung des Rasthakens 30 mit der Rasthakenaufnahme 36 zu lösen ist.

Der in Figur 3 dargestellte Teilschnitt durch Figur 1 zeigt die Haltevorrichtung 16 zusammen mit einem Teil des Elektronikgehäuses 20 sowie einem Teil des Poltopfes 22 im montierten Zustand. Dargestellt ist außerdem ein Teil des Bürstenhalters 18, in den eine Rasthakenaufnahme 36 zur längsspielfreien Verrastung des Rasthakens 30 eingearbeitet ist.

Die Rasthakenaufnahme 36 weist zu diesem Zweck eine gestufte Endfläche 40 auf, die in Figur 4 in vergrößerter Darstellung zu sehen ist. Die der gestuften Endfläche zugewandte Fläche 33 des Rasthakens 30 kann so mit einer der Stufen 41 in Kontakt gebracht werden, daß eine längsspielfreie Verrastung der Haltevorrichtung 16 ermöglicht ist.

In Figur 5 ist eine mögliche Verbindung der Haltevorrichtung 16 mit dem Elektronikgehäuse 20 näher dargestellt. Die Haltevorrichtung 16 weist die Führung 26 auf, an der zwei gegenüberliegende T-Nut-förmige Stege 27 ausgebildet sind. Diese T-Nut-förmigen Stege umschließen eine am Elektronikgehäuse 20 angeordnete Gegenführung 38 und fixieren so die Haltevorrichtung 16 am Elektronikgehäuse 20.

Gleichzeitig ist durch diese Konstruktion eine Verschiebung der Haltevorrichtung 16 in Richtung längs des Mittelteils 24 gewährleistet, wodurch eine vorteilhafte Montage und Demontage der Haltevorrichtung 16, insbesondere auch in bezug auf die Reihenfolge der einzelnen Montageschritte, ermöglicht wird.

## Patentansprüche

1. Elektromotorischer Antrieb, insbesondere Fensterheberantrieb für ein Kraftfahrzeug, mit einem Elektromotor (10), und mit einer damit verbundenen Motorelektronik (14), die von einem Elektronikgehäuse (20) umgeben ist, sowie eine Haltevorrichtung (16), die das Elektronikgehäuse (20) gegenüber einem Poltopf (22) des Elektromotors (10) abstützt, **dadurch gekennzeichnet, daß** die Haltevorrichtung (16) separierbar ausgebildet und nachträglich, nach der Montage des Elektronikgehäuses einschiebbar ist und eine Führung (26) entlang des Poltopfes (22) zur Verbindung mit einer am Elektronikgehäuse (20) angeordneten Gegenführung (38) aufweist und mit dem Antrieb verrastbar ist.

2. Elektromotorischer Antrieb nach Anspruch 1, **dadurch gekennzeichnet, daß** die Führung (26) auf einem Mittelteil (24) der Haltevorrichtung (16) entlang des Poltopfes (22) angeordnet ist.

3. Elektromotorischer Antrieb nach Anspruch 2, **dadurch gekennzeichnet, daß** die Führung (26) aus zwei sich gegenüberliegenden, eine T-Nut bildenden Stegen (27) besteht, die längs des Mittelteils (24) angeordnet sind.

4. Elektromotorischer Antrieb nach einem der Ansprüche 1 bis 3, **dadurch gekennzeichnet, daß** die Haltevorrichtung (16) eine Einrastvorrichtung (28) zur Verbindung mit einem dem Elektromotor (10) zugeordneten Bürstenhalter (18) aufweist.

5. Elektromotorischer Antrieb nach Anspruch 4, **dadurch gekennzeichnet, daß** die Einrastvorrichtung (28) an ihrem freien Ende mit einem Rasthaken (30) versehen ist.

6. Elektromotorischer Antrieb nach einem der Ansprüche 4 oder 5, **dadurch gekennzeichnet, daß** die Einrastvorrichtung (28) mit einem Zapfen (31) zur genauen Positionierung der Haltevorrichtung (16) versehen ist.

7. Elektromotorischer Antrieb nach Anspruch 6, **dadurch gekennzeichnet, daß** der Rasthaken (30) in einer in einen Bürstenhalter (18) integrierten Rasthakenaufnahme (36) verrastbar ist.

8. Elektromotorischer Antrieb nach Anspruch 7, **dadurch gekennzeichnet, daß** die Rasthakenaufnahme (36) eine gestufte Endfläche (40) zur längsspielfreien Verrastung des Rasthakens (30) aufweist.

9. Elektromotorischer Antrieb nach einem der Ansprüche 1 bis 8, **dadurch gekennzeichnet, daß** die Haltevorrichtung (16) eine Aufnahme (34) zur Verbindung mit einem freien Ende des Poltopfes (22) aufweist.

10. Elektromotorischer Antrieb nach Anspruch 9, **dadurch gekennzeichnet, daß** die Aufnahme (34) an einem dem Mittelteil (24) zugeordneten Aufnehmerteil (32) angeordnet ist, das im wesentlichen quer zum Mittelteil (24) angeordnet ist.

11. Elektromotorischer Antrieb nach einem der Ansprüche 9 bis 10, **dadurch gekennzeichnet, daß** die Aufnahme (34) im Aufnehmerteil (32) von einer kreisförmigen Öffnung zur Aufnahme eines zylindrischen Fortsatzes (23) des Poltopfes (22) gebildet ist.

## Claims

1. Electromotive drive, in particular window-winder drive for a motor vehicle, having an electric motor (10) and having motor electronics (14), which are connected to the said electric motor and are surrounded by an electronics housing (20), and a holding apparatus (16) which supports the electronics housing (20) with respect to a pole pot (22) of the electric motor (10), **characterized in that** the holding apparatus (16) is formed such that it can be separated and can then be inserted following installation of the electronics housing, and has a guide (26) along the pole pot (22) for connection to a mating guide (38), which is arranged on the electronics housing (20), and can be latched to the drive.

2. Electromotive drive according to Claim 1, **characterized in that** the guide (26) is arranged on a centre part (24) of the holding apparatus (16) along the pole pot (22).

3. Electromotive drive according to Claim 2, **characterized in that** the guide (26) comprises two webs (27) which are situated opposite one another, form a T-groove, and are arranged along the centre part (24).

4. Electromotive drive according to one of Claims 1 to 3, **characterized in that** the holding apparatus (16) has a latching-in apparatus (28) for connection to a brush holder (18) which is associated with the electric motor (10).

5. Electromotive drive according to Claim 4, **characterized in that** the latching-in apparatus (28) is provided with a latching hook (30) at its free end.

6. Electromotive drive according to either of Claims 4 and 5, **characterized in that** the latching-in apparatus (28) is provided with a stud (31) for accurate positioning of the holding apparatus (16).

7. Electromotive drive according to Claim 6, **characterized in that** the latching hook (30) can be latched into a latching hook receiving means (36) which is integrated in a brush holder (18).

8. Electromotive drive according to Claim 7, **characterized in that** the latching hook receiving means (36) has a stepped end face (40) for latching the latching hook (30) without longitudinal play.

9. Electromotive drive according to one of Claims 1 to 8, **characterized in that** the holding apparatus (16) has a receiving means (34) for connection to a free end of the pole pot (22).

10. Electromotive drive according to Claim 9, **characterized in that** the receiving means (34) is arranged on a receiver part (32) which is associated with the centre part (24) and is arranged substantially transverse to the centre part (24).

11. Electromotive drive according to either of Claims 9 and 10, **characterized in that** the receiving means (34) in the receiver part (32) is formed by a circular opening for receiving a cylindrical extension (23) of the pole pot (22).

## Revendications

1. Entraînement électromotorisé, notamment pour commande de lève-vitre pour un véhicule automobile, avec un moteur électrique (10), et avec une électronique de moteur (14) raccordée à celui-ci, entourée par une enceinte électronique (20), ainsi qu'un dispositif de support (16) qui soutient le boîtier d'électronique (20) par rapport à un boîtier polaire (22) du moteur électrique (10),
**caractérisé en ce que**
le dispositif de support (16) est séparable, il peut être inséré ultérieurement après le montage de l'enceinte électronique, il présente un guidage (26) le long du boîtier polaire (22) en vue de son assemblage avec un contre-guidage (38) disposé sur l'enceinte électronique (20) et peut être verrouillé sur l'organe de commande.

2. Entraînement électromotorisé selon la revendication 1,
**caractérisé en ce que**
le guidage (26) est disposé sur une pièce intermédiaire (24) du dispositif de support (16) le long du boîtier polaire (22).

3. Entraînement électromotorisé selon la revendication 2,
**caractérisé en ce que**
le guidage (26) se compose de deux nervures opposées (27), formant une rainure en T, et disposées le long de la pièce intermédiaire (24).

4. Entraînement électromotorisé selon l'une quelconque des revendications 1 à 3,
**caractérisé en ce que**
le dispositif de support (16) comporte un dispositif d'accrochage (28) pour son assemblage avec un support de balai (18) associé au moteur électrique (10).

5. Entraînement électromotorisé selon la revendication 4,
**caractérisé en ce que**
le dispositif d'accrochage (28) est pourvu d'un crochet (30) à son extrémité libre.

6. Entraînement électromotorisé selon l'une quelconque des revendications 4 ou 5,
**caractérisé en ce que**
le dispositif d'accrochage (28) est pourvu d'un tourillon (31) en vue du positionnement précis du dispositif de support (16).

7. Entraînement électromotorisé selon la revendication 6,
**caractérisé en ce que**
le crochet d'accrochage (30) peut être verrouillé dans un logement d'enclenchement (36) intégré dans un support de balai (18).

8. Entraînement électromotorisé selon la revendication 7,
**caractérisé en ce que**
le logement d'enclenchement (36) présente une face d'extrémité (40) étagée pour l'enclenchement du crochet (30) sans jeu longitudinal.

9. Entraînement électromotorisé selon l'une quelconque des revendications 1 à 8,
**caractérisé en ce que**
le dispositif de support (16) présente un logement (34) en vue de son assemblage avec une extrémité libre du boîtier polaire (22).

10. Entraînement électromotorisé selon la revendication 9,
**caractérisé en ce que**
le logement (34) est disposé dans une pièce de réception (32) associée à la pièce intermédiaire (24), et placée en direction sensiblement transversale par rapport à la pièce intermédiaire (24).

11. Entraînement électromotorisé selon l'une quelconque des revendications 9 à 10,
**caractérisé en ce que**
le logement (34) dans la pièce de réception (32) est formé par une ouverture circulaire destinée à recevoir un prolongement cylindrique (23) du boîtier polaire (22).
